# FASCICULE DE BREVET EUROPEEN

(11) **EP 3 899 434 B1**
(45) Date de publication et mention de la délivrance du brevet: **24.08.2022**
(21) Numéro de dépôt: 19848878.5
(22) Date de dépôt: 19.12.2019
(51) Int. Cl.: G01D 5/20, G01D 5/22

(54) **ROTOR POUR CAPTEUR INDUCTIF DE DÉPLACEMENT ANGULAIRE**
ROTOR FÜR INDUKTIVEN WINKELBEWEGUNGSSENSOR
ROTOR FOR INDUCTIVE ANGLE DISPLACEMENT SENSOR

(30) Priorité: 19.12.2018 FR 1873379
(43) Date de publication de la demande: 27.10.2021
(73) Titulaire: SAFRAN ELECTRONICS & DEFENSE, 92100 Boulogne Billancourt (FR)
(72) Inventeur: SCHMITT, Matthieu, 77550 MOISSY-CRAMAYEL (FR); RABRET, Bernard, 77550 MOISSY-CRAMAYEL (FR); BESSON, Patrick, 77550 MOISSY-CRAMAYEL (FR); BESSEDE, Thierry, 77550 MOISSY-CRAMAYEL (FR)
(74) Mandataire: Regimbeau
(86) Numéro de dépôt international: PCT/FR2019/053178
(87) Numéro de publication internationale: WO 2020/128343

(56) Documents cités:
- US-A- 3 531 750
- US-A- 4 347 491

## Description

### DOMAINE DE L'INVENTION

La présente invention concerne le domaine des capteurs inductifs de déplacement angulaire.

### ETAT DE LA TECHNIQUE

Les capteurs inductifs de déplacement angulaire (en anglais RVDT, Rotary Variable Differential Transformer) sont généralement utilisés pour mesurer le déplacement angulaire d'une pièce par rapport à une autre.

Un capteur inductif de déplacement angulaire comprend de manière connue un rotor et un stator. Le stator en matériau ferromagnétique comprend un enroulement primaire et deux enroulements secondaires, et délimite une cavité à l'intérieur de laquelle est placé le rotor. Le rotor, en matériau ferromagnétique, est non-bobiné (c'est-à-dire dépourvu d'enroulement) et mobile en rotation à l'intérieur du stator. Le rotor est solidaire de la pièce dont le déplacement angulaire est à mesurer.

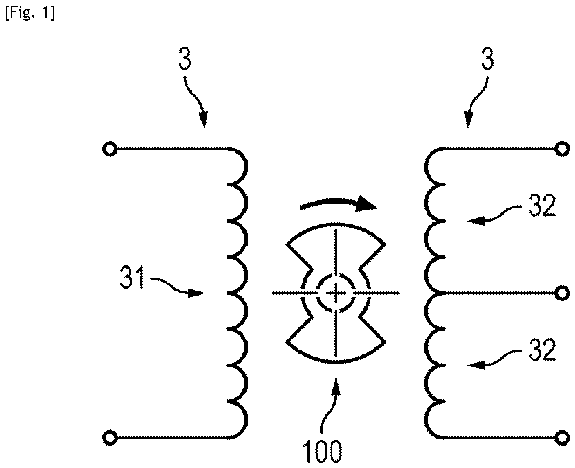

Un capteur inductif de déplacement angulaire, illustré de manière schématique en figure 1, fonctionne suivant le principe d'un transformateur. L'enroulement primaire 31 du stator 3 est soumis à un courant, qui induit par couplage électromagnétique un champ magnétique dans le rotor 100 ferromagnétique. Ce champ magnétique induit à son tour une tension dans les deux enroulements secondaires 32 du stator 3.

Les deux enroulements secondaires du stator sont disposés de sorte que leurs tensions de sortie sont reliées à l'angle formé entre le rotor et le stator par la relation θ = θ0 * (U1 - U2) / (U1 + U2), où θ représente l'angle mesuré par le capteur inductif de déplacement angulaire, θ0 représente la sensibilité du capteur, U1 représente la tension de sortie du premier enroulement secondaire, et U2 représente la tension de sortie du deuxième enroulement secondaire.

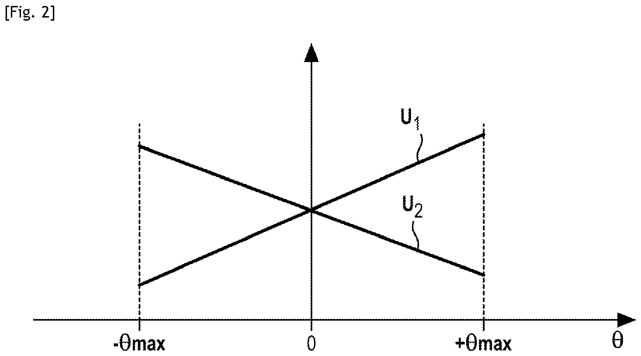

Le graphe de la figure 2 illustre la relation entre les tensions de sortie U1, U2 des enroulements secondaires du stator et le déplacement angulaire du rotor. La plage angulaire utile, c'est-à-dire la plage angulaire sur laquelle le déplacement angulaire du rotor peut être mesuré avec une précision acceptable, correspond à la plage [-θmax ; + θmax].

Un capteur inductif de déplacement angulaire détermine le déplacement angulaire du rotor à partir d'un rapport de tension, et s'affranchit ainsi des défauts de l'électronique. Un capteur inductif de déplacement angulaire est donc, en plus d'être peu coûteux, un dispositif très robuste, qui peut fonctionner de manière fiable dans des environnements difficiles (températures et pressions extrêmes, humidité, présence de corps étrangers...). Néanmoins, la plage angulaire utile d'un capteur inductif de déplacement angulaire est limitée, la précision du capteur étant notamment limitée par les flux de fuite du rotor. Pour un déplacement angulaire non contenu dans cette plage angulaire utile, la précision de mesure du capteur est sensiblement et rapidement dégradée, par exemple de manière exponentielle.

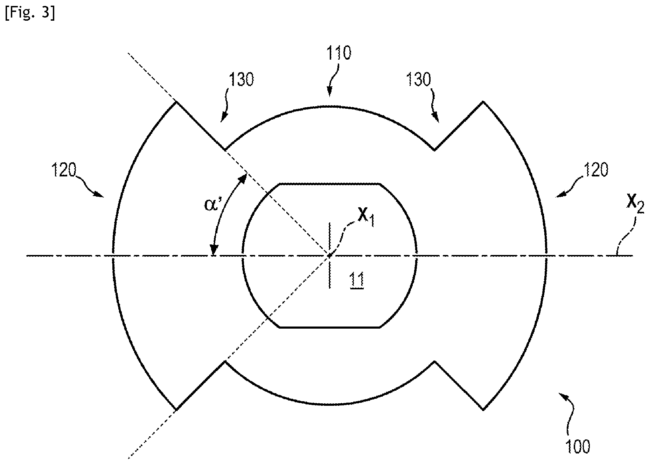

Ainsi qu'illustré à titre d'exemple en figure 3, un rotor 100 de capteur inductif de déplacement angulaire présente de manière connue une partie centrale 110 et deux parties actives 120 situées de part et d'autre de la partie centrale 110 par rapport à un premier axe X1 de symétrie du rotor, le rotor 100 étant mobile en rotation autour de l'axe X1. Le rotor 100 est également symétrique par rapport à un deuxième axe X2, compris dans un plan normal au premier axe X1 et passant par les deux parties actives 120. Les parties actives 120 sont reliées à la partie centrale 110 par des parois de liaison 130 formant, dans un plan normal au premier axe X1, un angle α' de 45° avec le deuxième axe X2. Un tel rotor permet d'accéder à une plage angulaire utile (sur laquelle la précision de mesure est acceptable) typiquement de l'ordre de +/- 36°.

Le document US 4,347,491 A1 et le document US 3,531,750 A1 décrivent des rotors de capteur inductif de déplacement angulaire, comprenant deux parties actives diamétralement opposées.

Dans certains cas, il est nécessaire de mesurer le déplacement angulaire sur une plage angulaire plus importante tout en conservant une précision de mesure acceptable, voire améliorée.

Un moyen connu pour mesurer le déplacement angulaire d'un rotor sur un tour complet et avec une grande précision est un résolveur à rotor bobiné. Le rotor d'un résolveur est empilé en hélice, et ses génératrices ne sont pas concentriques au rotor. Le rotor est en outre bobiné et comporte l'enroulement primaire, les deux enroulements secondaires étant situés sur le stator. Le rotor doit alors être alimenté, et son bobinage nécessite la mise en place de collecteurs ou d'un transformateur tournant.

Le résolveur est un dispositif plus coûteux et moins robuste qu'un capteur inductif de déplacement angulaire. Par conséquent, le résolveur à rotor bobiné n'est pas adapté dans les cas où le déplacement angulaire doit être mesuré dans des environnements difficile, par exemple dans le domaine de l'aéronautique, du spatial ou du militaire, ou pour un coût limité.

### EXPOSE DE L'INVENTION

Un but de l'invention est de proposer un capteur inductif de déplacement angulaire présentant une plage angulaire utile augmentée.

Un autre but de l'invention est de proposer un capteur inductif de déplacement angulaire présentant une plus grande précision de mesure.

Un autre but de l'invention est de conserver la robustesse, le faible coût et la facilité de fabrication d'un capteur inductif de déplacement angulaire.

Il est à cet effet proposé, selon un premier aspect de l'invention, un rotor non bobiné pour capteur inductif de déplacement angulaire, le rotor étant mobile en rotation autour d'un premier axe et symétrique par rapport à ce premier axe, le rotor présentant :
- une partie centrale,
- deux parties actives de part et d'autre de la partie centrale par rapport au premier axe, chaque partie active comprenant :
- une surface externe configurée pour venir en regard d'une face interne d'un stator du capteur inductif de déplacement angulaire,
- deux parois de liaison reliant la surface externe à la partie centrale,
le rotor présentant en outre une symétrie axiale par rapport à un deuxième axe compris dans un plan normal au premier axe et passant par les deux parties actives, le rotor étant caractérisé en ce que dans le plan normal, chaque paroi de liaison forme un angle supérieur à 45° avec le deuxième axe.

Certaines caractéristiques préférées mais non limitatives du rotor décrit ci-dessus sont les suivantes, prises individuellement ou en combinaison :
- chaque paroi de liaison forme un angle compris entre 45° et 120° avec le deuxième axe,
- la surface externe de chaque partie active est un secteur d'anneau et s'étend sur un secteur angulaire de 90°,
- la jonction entre la surface externe et chaque paroi de liaison forme une extrémité biseautée,
- le rotor comprend en outre deux évidements s'étendant de part et d'autre de la partie centrale au niveau de chacune des jonctions avec les parois de liaison,
- dans le plan normal, une distance entre tout point de la partie centrale et le deuxième axe est inférieure à une distance entre chaque intersection entre la surface externe et les parois de liaison et le deuxième axe,
- un passage traversant est formé dans la partie centrale et débouche dans chaque face de ladite partie centrale,
- le passage traversant est centré sur le premier axe et présente une section cylindrique de révolution tronquée comportant deux méplats en regard du deuxième axe,
- le passage traversant est centré sur le premier axe et présente une section cylindrique de révolution.

Selon un deuxième aspect, il est proposé un capteur inductif de déplacement angulaire comprenant un rotor selon le premier aspect et un stator, le stator comprenant une face interne en regard de laquelle le rotor est configuré pour être placé.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
[Fig. 1] La figure 1, déjà commentée, illustre de façon schématique un capteur inductif de déplacement angulaire selon l'art antérieur.
[Fig. 2] La figure 2, déjà commentée, est un graphe illustrant des tensions de sortie d'enroulements secondaires d'un capteur inductif de déplacement angulaire selon l'art antérieur en fonction du déplacement angulaire.
[Fig. 3] La figure 3, déjà commentée, illustre de façon schématique une coupe transversale d'un rotor pour un capteur inductif de déplacement angulaire selon l'art antérieur.
[Fig. 4] La figure 4 illustre de façon schématique une coupe transversale d'un capteur inductif de déplacement angulaire selon un mode de réalisation de l'invention.
[Fig. 5] La figure 5 illustre de façon schématique une coupe transversale d'un rotor pour capteur inductif de déplacement angulaire selon un mode de réalisation de l'invention.
[Fig. 6] La figure 6 est un graphe illustrant la précision de mesure de déplacement angulaire en fonction du déplacement angulaire, pour différents capteurs inductifs de déplacement angulaire selon l'art antérieur et selon deux modes de réalisation de l'invention.
[Fig. 7] La figure 7 illustre de façon schématique une coupe transversale d'une partie d'un capteur inductif de déplacement angulaire selon l'art antérieur.
[Fig. 8] La figure 8 illustre de façon schématique une coupe transversale d'une partie d'un capteur inductif de déplacement angulaire selon un mode de réalisation de l'invention.
[Fig. 9] La figure 9 illustre de façon schématique une coupe transversale d'une partie d'un capteur inductif de déplacement angulaire selon un mode de réalisation de l'invention.
Sur l'ensemble des figures, les éléments similaires portent des références identiques.

### DESCRIPTION DETAILLEE DE L'INVENTION

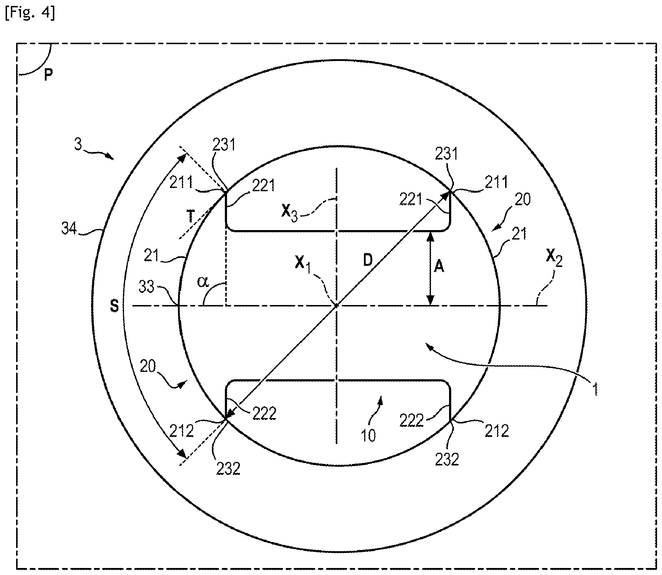

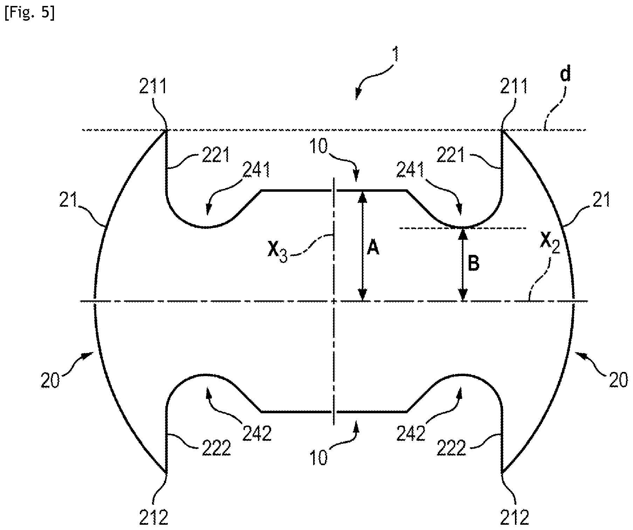

Un rotor 1 pour capteur inductif de déplacement angulaire, illustré à titre d'exemple non limitatif en figures 4 et 5, est non bobiné, mobile en rotation autour d'un premier axe X1 et symétrique par rapport à ce premier axe X1. Le rotor 1 présente :
- une partie centrale 10,
- deux parties actives 20 de part et d'autre de la partie centrale 10 par rapport au premier axe X1, chaque partie active 20 comprenant :
- une surface externe 21 configurée pour venir en regard d'une face interne 33 d'un stator 3 du capteur inductif de déplacement angulaire,
- deux parois de liaison 221, 222 reliant la surface externe 21 à la partie centrale 10.

Le rotor 1 présente en outre une symétrie axiale par rapport à un deuxième axe X2 compris dans un plan normal P au premier axe X1 et passant par les deux parties actives 20. Dans le plan normal P, chaque paroi de liaison 221, 222 forme un angle α supérieur à 45° avec le deuxième axe X2. En d'autres termes, chaque paroi de liaison 221, 222 forme un angle α supérieur à 45° avec un plan comprenant le premier axe X1 et le deuxième axe X2.

Dans la suite de la demande, les termes « interne » et « externe » seront utilisés en référence au premier axe X1, si bien qu'une partie interne d'un élément est plus proche du premier axe X1 qu'une partie externe du même élément. Par ailleurs, un troisième axe X3 est défini comme étant normal au premier axe X1 et au deuxième axe X2 de sorte que les axes X1, X2 et X3 définissent ensemble un repère orthonormé.

Le rotor 1 peut par exemple être fabriqué par assemblage de tôles embouties, ou être massif et découpé dans la masse. Un rotor 1 existant peut être repris, par exemple en électroérosion, afin d'obtenir un profil de rotor 1 présentant un angle α supérieur à 45° entre la paroi de liaison 221, 222 et le deuxième axe X2. Le rotor 1 peut être réalisé en un matériau ferromagnétique, par exemple en NiFe80. Le rotor 1 conserve sa simplicité de réalisation, et son coût de fabrication n'est pas sensiblement augmenté.

Selon un premier mode de réalisation, illustré à titre d'exemple en figure 4, chaque partie active 20 du rotor 1 présente une surface externe 21 et deux parois de liaison 221, 222. Chaque surface externe 21 peut notamment présenter une première extrémité 211 et une deuxième extrémité 212 opposée à la première extrémité 211 par rapport au deuxième axe X2. Un diamètre D du rotor 1 correspond à une distance entre les extrémités 211, 212 opposées des surfaces externes 21. Un rayon R du rotor 1 correspond à la moitié d'un diamètre D du rotor 1.

Au sein d'une partie active 20, une première paroi de liaison 221 relie la première extrémité 211 de la surface externe 21 à la partie centrale 10, et une deuxième paroi de liaison 222 relie la deuxième extrémité 212 de la surface externe 21 à la partie centrale 10.

Chaque paroi de liaison 221, 222 peut comporter une partie principale sensiblement plane et ainsi comporter, dans le plan normal P, une partie principale sensiblement rectiligne. L'angle α entre chaque paroi de liaison 221, 222 et le deuxième axe X2 correspond alors à l'angle entre chaque partie principale sensiblement rectiligne de la paroi de liaison 221, 222 et le deuxième axe X2.

Un tel angle α supérieur à 45° entre la paroi de liaison 221, 222 et le deuxième axe X2 permet de diminuer les flux de fuite au niveau de jonctions entre la surface externe 21 et les parois de liaison 221, 222. Ainsi, un tel profil de rotor 1 permet d'augmenter la plage angulaire utile du capteur, c'est-à-dire la plage angulaire sur laquelle le déplacement du rotor 1 peut être mesuré avec une précision acceptable. L'amélioration des performances du capteur inductif de déplacement angulaire est réalisée sans nécessiter d'autre modification du capteur que celle du profil du rotor 1.

Plus particulièrement, l'angle α entre la paroi de liaison 221, 222 et le deuxième axe X2 peut présenter une valeur comprise entre 45° et 120°, de préférence égale à 90°. Pour un angle α égal à 90°, la paroi de liaison 221, 222 est perpendiculaire au deuxième axe X2. La fabrication du rotor 1 est ainsi facilitée par rapport à celle d'un rotor avec un angle α différent de 90°.

La surface externe 21 de partie active 20 peut notamment être un secteur d'anneau s'étendant sur un secteur angulaire S sensiblement de 90°. Le rotor 1 étant symétrique par rapport à l'axe X2, la surface externe 21 s'étend sur un secteur angulaire S/2 de 45° de part et d'autre du deuxième axe X2. Dans le plan normal P, une tangente T à la première extrémité 211 de la surface externe 21 forme alors un angle de 45° avec le deuxième axe X2, et un angle entre la tangente T et la première paroi de liaison 221 est inférieur à 90°. Dans le cas où chaque paroi de liaison 221, 222 forme un angle α de 90° avec le deuxième axe X2, chaque paroi de liaison 221, 222 forme alors un angle de 45° avec la tangente T.

Selon une variante de réalisation, la jonction entre la surface externe 21 et chaque paroi de liaison 221, 222 peut former une extrémité biseautée. Le rotor 1 peut alors présenter deux parois supplémentaires 231, 232. Une première paroi supplémentaire 231 assure la jonction entre la première extrémité 211 de la surface externe 21 et la première paroi de liaison 221. Une deuxième paroi supplémentaire 232 assure la jonction entre la deuxième extrémité 212 de la surface externe 21 et la deuxième paroi de liaison 222. Ces parois supplémentaires 231, 232 permettent de faciliter l'usinage du rotor, sans détériorer sensiblement la plage angulaire utile.

De préférence, chaque paroi supplémentaire 231, 232 est sensiblement plane et forme dans le plan normal P un angle de 45° avec le deuxième axe X2. De préférence, les dimensions des parois supplémentaires 231, 232 sont réduites par rapport aux dimensions de la surface externe 21, des parois de liaison 221, 222 et de la partie centrale 10 du rotor 1. En variante, les parois supplémentaires 231, 232 peuvent être courbes, ou être absentes lorsque la surface externe 21 est directement reliée aux parois de liaison 221, 222 par des angles vifs.

De préférence, lorsque la jonction entre la surface externe 21 et chaque paroi de liaison 221, 222 forme une extrémité biseauté, une distance entre une extrémité externe de chaque paroi de liaison 221, 222 et le premier axe X1 est comprise entre 90 % et 100 % du rayon R du rotor 1.

Selon une variante de réalisation, dans le plan normal P, une distance entre tout point de la partie centrale 10 et le deuxième axe X2 est inférieure à une distance entre chaque intersection entre la surface externe 21 et les parois de liaison 221, 222 et le deuxième axe X2. Notamment, une distance entre tout point de la partie centrale 10 et le deuxième axe X2 est de préférence inférieure à une distance entre chaque extrémité 211, 212 de la surface externe 21 et le deuxième axe X2. Une telle configuration a pour effet de limiter les flux de fuite du rotor 1 vers le stator 3 au niveau de la partie centrale 10 du rotor 1.

La figure 5 illustre un exemple dans lequel les surfaces externes 21 du rotor 1 sont symétriques par rapport au troisième axe X3, en plus d'être symétriques par rapport au deuxième axe X2. Alors, une droite d reliant les premières extrémités 211 de chaque surface externe 21 est parallèle au deuxième axe X2. Tout point de la partie centrale 10, y compris de son point le plus externe, présente une distance au deuxième axe X2 inférieure à une distance entre la droite d reliant les premières extrémités 211 de chaque surface externe 21 et le deuxième axe X2.

Selon une variante de réalisation, un passage traversant 11, illustré par exemple pour un rotor selon l'art antérieur en figure 3, peut être formé dans la partie centrale 10 et déboucher dans chaque face de ladite partie centrale 10. La partie centrale 10 peut notamment comporter deux faces situées de part et d'autre de tout plan normal P passant par le rotor 1. De préférence, un arbre solidaire du rotor 1 et dont le déplacement angulaire est à mesurer est placé à l'intérieur du passage traversant 11.

Le passage traversant 11 peut être centré sur le premier axe X1 et présenter une section cylindrique de révolution tronquée comportant deux méplats en regard du deuxième axe X2. Les deux méplats peuvent notamment être symétriques et parallèles au deuxième axe X2. Les sections cylindriques peuvent être situées de part et d'autre des méplats et du troisième axe X3, et être disposées symétriquement par rapport au troisième axe X3. Une telle forme de passage traversant 11, illustrée à titre d'exemple en figure 3, permet de conserver la mesure de déplacement angulaire effectuée par le capteur inductif, même en cas de décollement du rotor 1 par rapport à l'arbre.

En variante, le passage traversant 11 peut être centré sur le premier axe X1 et présenter une section cylindrique de révolution. L'ajout d'une goupille est alors nécessaire pour conserver la mesure de déplacement angulaire effectuée par le capteur inductif en cas de décollement du rotor 1 par rapport à l'arbre.

En variante, le passage traversant 11 peut présenter toute autre forme susceptible de maintenir de manière solidaire le rotor 1 sur la pièce dont le déplacement angulaire est mesuré.

Selon un deuxième mode de réalisation, illustré à titre d'exemple en figure 5, un rotor 1 selon le premier mode de réalisation présente en outre deux évidements 241, 242. Les évidements 241, 242 s'étendent de part et d'autre de la partie centrale 10 au niveau de chacune des jonctions avec les parois de liaison 221, 222. En d'autres termes, la première paroi de liaison 221 est reliée à la partie centrale 10 par un premier évidement 241 et la deuxième paroi de liaison 222 est reliée à la partie centrale 10 par un deuxième évidement 242.

Chaque évidement 241, 242 peut comporter dans le plan normal P une partie sensiblement en forme d'arc de cercle. Une distance entre un centre de l'arc de cercle de l'évidement et le deuxième axe X2 peut correspondre sensiblement à une distance entre la partie centrale 10 et le deuxième axe X2. Chaque évidement 241, 242 peut comporter en outre dans le plan normal P une partie sensiblement droite. La partie sensiblement droite peut notamment assurer la jonction entre la partie en arc de cercle de l'évidement 241, 242 et la partie centrale 10, et peut former un angle d'environ 45° avec le deuxième axe X2. De tels évidements 241, 242 permettent de limiter les flux de fuite au niveau jonctions entre les surfaces externes 21 et les parois de liaison 221, 222.

Une distance B entre un évidement 241, 242 et le deuxième axe X2 correspond à une distance B entre un point de l'évidement 241, 242 le plus proche du deuxième axe X2 et le deuxième axe X2. De préférence, la distance B entre l'évidement 241, 242 et le deuxième axe X2 est inférieure à une distance entre un point de la paroi de liaison 221, 222 le plus proche du deuxième axe X2 et le deuxième axe X2. De préférence, la distance B entre l'évidement 241, 242 et le deuxième axe X2 est également inférieure à une distance A entre un point de la partie centrale 10 le plus proche du deuxième axe X2 et le deuxième axe X2. De préférence, la distance B entre l'évidement 241, 242 et le deuxième axe X2 est supérieure à la moitié de la distance A entre le point de la partie centrale 10 le plus proche du deuxième axe X2 et le deuxième axe X2.

Une modification du profil de rotor 1 selon le premier mode de réalisation ou le deuxième mode de réalisation ne modifie pas sensiblement la saturation des matériaux magnétiques et leur perméabilité relative, et n'engendre pas de valeurs magnétiques incompatibles avec les caractéristiques du matériau utilisé.

Un capteur inductif de déplacement angulaire, illustré à titre d'exemple en figure 4, comprend un rotor 1 conforme à un mode de réalisation décrit précédemment, et un stator 3. Le stator 3 comprend une face interne 33 en regard de laquelle le rotor 1 est configuré pour être placé. Le stator 3 comprend plusieurs encoches 35 susceptibles de loger l'enroulement primaire 31 et les enroulements secondaires 32.

Le stator 3 peut comporter une face externe 34 sensiblement cylindrique de révolution autour du premier axe X1, et sa face interne 33 peut définir une cavité sensiblement cylindrique de révolution autour du premier axe X1. Les dimensions de la face interne 33 du stator 3 peuvent correspondre sensiblement à celles des surfaces externes 21 du rotor 1. Les surfaces externes 21 du rotor 1 peuvent être en contact avec la face interne 33 du stator 3, ou être séparée de la face interne 33 du stator 3 par un espace. Les surfaces externes 21 définissent alors des portions de cylindre disposées sensiblement symétriquement par rapport au troisième axe X3, chaque portion de cylindre étant symétrique par rapport au deuxième axe X2. Par ailleurs, dans le plan normal P, l'angle formé entre chaque paroi de liaison et le deuxième axe X2 est supérieur à 45°.

Ainsi, seul le profil du rotor 1 est modifié et le profil des surfaces externes 21 est inchangé. Le capteur inductif de déplacement angulaire conserve donc sa facilité de fabrication, son faible coût et sa robustesse.

Des simulations ont été effectuées pour comparer les performances de capteurs inductifs de déplacement angulaire en fonction du déplacement angulaire de leur rotor, pour des capteurs comprenant :
- un rotor selon l'art antérieur (Profil art ant),
- un rotor 1 selon le premier mode de réalisation (Profil 1),
- un rotor 1 selon le deuxième mode de réalisation (Profil 2), c'est-à-dire correspondant au profil 1 et présentant en outre des évidements 241, 242, reliant la partie centrale 10 et les parois de liaison 221, 222.

Dans cet exemple de réalisation, la plage angulaire utile est la plage angulaire pour laquelle la précision de mesure est comprise entre +/- 0,05°.

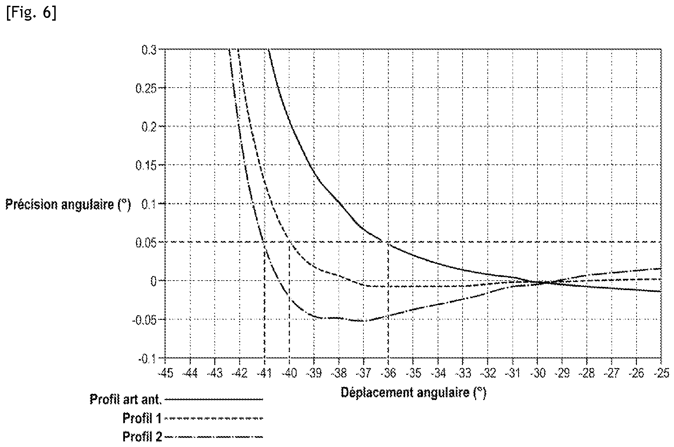

Les résultats de ces simulations sont illustrés en figure 6 et synthétisés dans le tableau suivant :

**[Table 1]**

| | Profil art ant | Profil 1 | Profil 2 |
|---|---|---|---|
| Plage angulaire utile | +/- 36° | +/- 40° | +/- 41 ° |
| Précision à +/-36° | +/- 0,048° | +/- 0,006° | +/- 0,043° |
| Précision à +/-40° | +/- 0,208° | +/- 0,053° | +/- 0,05° |
| Précision à +/-41° | +/- 0,325° | +/- 0,13° | +7- 0,05° |

Le Profil 1 conduit à une plage angulaire utile augmentée de +/- 4° par rapport au profil art ant, ainsi qu'à une précision de mesure sur une plage angulaire de +/- 36° améliorée par rapport au profil art ant.

Le Profil 2 conduit à une plage angulaire utile augmentée de +/- 5° par rapport au profil art ant, ainsi qu'à une précision de mesure sur une plage angulaire de +/- 36° sensiblement équivalente à celle du profil art ant.

Les Profils 1 et 2 conduisent à une précision de mesure (en % de l'angle mesuré) d'environ +/- 0,15 % sur une plage angulaire de +/- 40°, là où la précision de mesure du profil art ant est d'environ +/- 0,5 % sur une plage angulaire de +/- 40°.

En d'autres termes, un profil de rotor selon le premier mode de réalisation conduit à une plage angulaire utile augmentée, ainsi qu'à une précision de mesure améliorée sur la plage angulaire utile d'un rotor selon l'art antérieur. Un profil de rotor selon le deuxième mode de réalisation, soit avec des évidements 241, 242 reliant la partie centrale 10 et les parois de liaison 221, 222, conduit à une plage angulaire utile augmentée par rapport à la plage angulaire utile d'un rotor selon le premier mode de réalisation, et à une précision de mesure équivalente à celle d'un rotor selon l'art antérieur sur la plage angulaire utile d'un rotor selon l'art antérieur. Le profil de rotor peut donc être choisi en fonction des exigences de plage angulaire utile et de précision du capteur inductif de déplacement angulaire.

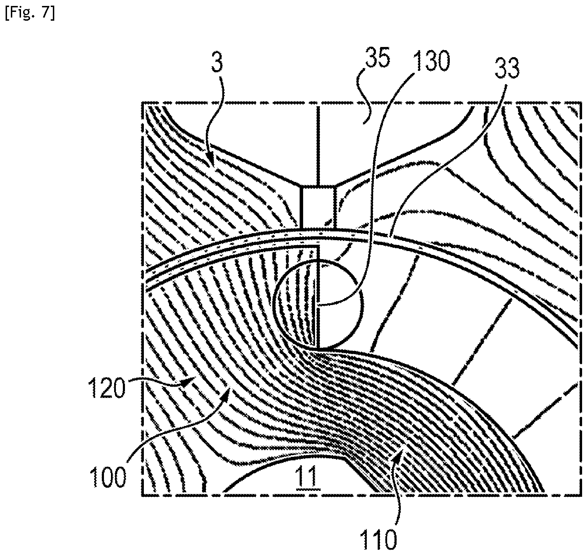

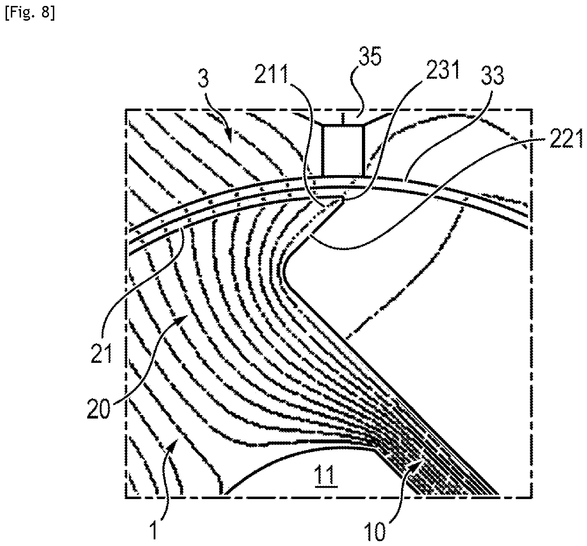

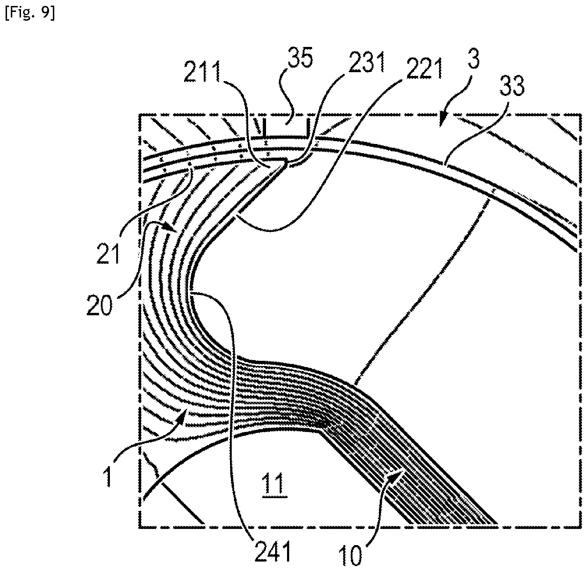

Les figures 7, 8 et 9 illustrent l'influence sur les lignes de champ, à déplacement angulaire donné, du profil de rotor. La figure 7 correspond au Profil art ant, la figure 8 correspond au Profil 1 et la figure 9 correspond au Profil 2. Les lignes de champ sont représentées de façon schématique sur ces figures.

Des lignes de champ de fuite peuvent apparaître au niveau d'une partie active 20. Ces lignes de champ de fuite ne restent pas contenues dans la partie active 20, la traversant depuis la partie centrale 10 vers sa surface externe 21 pour rejoindre le stator 3. Au contraire, comme illustré en figure 7, ces lignes de champ de fuite débouchent de la partie active 20 au niveau d'une paroi de liaison 221, 222 correspondante pour rejoindre le stator 3.

Des lignes de champ de fuite peuvent également apparaître au niveau d'une partie centrale 10. Ces lignes de champ de fuite ne restent pas contenues dans la partie centrale 10, mais débouchent de la partie centrale 10 sensiblement perpendiculairement à celle-ci, pour rejoindre le stator 3.

Les Profils 1 et 2 permettent de limiter le nombre de lignes de champ de fuite au niveau des parties actives 20 par rapport au Profil art ant. Ainsi, dans l'exemple illustré de manière schématique en figure 7, une ligne de champ de fuite est présente pour le Profil art ant au niveau de la partie active 20. Aucune ligne de champ de fuite n'est présente pour le Profil 1 (figure 8), ni pour le Profil 2 (figure 9).

Les Profils 1 et 2 permettent également d'éloigner les lignes de champ de fuite de la partie active 20 et/ou de les espacer entre elles par rapport au Profil art ant. Le Profil 2 permet d'éloigner davantage les lignes de champ de fuite de la partie active 20 et de les espacer davantage entre elles par rapport au Profil 1.

Ainsi, le nombre de lignes de champ de fuite du Profil 1 peut être réduit d'environ 60% par rapport au Profil art ant, et le nombre de lignes de champ de fuite du Profil 2 peut être réduit d'environ 80% par rapport au Profil art ant.

D'autres modes de réalisation peuvent être envisagés et une personne du métier peut facilement modifier les modes ou exemples de réalisation exposés ci-dessus ou en envisager d'autres tout en restant dans la portée de l'invention.

## Revendications

1. Rotor (1) non bobiné pour capteur inductif de déplacement angulaire, le rotor (1) étant mobile en rotation autour d'un premier axe (X1) et symétrique par rapport à ce premier axe (X1), le rotor (1) présentant :
- une partie centrale (10),
- deux parties actives (20) de part et d'autre de la partie centrale (10) par rapport au premier axe (X1), chaque partie active (20) comprenant :
- une surface externe (21) configurée pour venir en regard d'une face interne (33) d'un stator (3) du capteur inductif de déplacement angulaire,
- deux parois de liaison (221, 222) reliant la surface externe (21) à la partie centrale (10),
le rotor (1) présentant en outre une symétrie axiale par rapport à un deuxième axe (X2) compris dans un plan normal (P) au premier axe (X1) et passant par les deux parties actives (20), le rotor (1) étant **caractérisé en ce que** dans le plan normal (P), chaque paroi de liaison (221, 222) forme un angle (α) supérieur à 45° avec le deuxième axe (X2).

2. Rotor (1) selon la revendication 1, dans lequel chaque paroi de liaison (221, 222) forme un angle (α) compris entre 45° et 120° avec le deuxième axe (X2).

3. Rotor (1) selon l'une des revendications 1 ou 2, dans lequel la surface externe (21) de chaque partie active (20) est un secteur d'anneau et s'étend sur un secteur angulaire (S) de 90°.

4. Rotor (1) selon l'une des revendications précédentes, dans lequel la jonction entre la surface externe (21) et chaque paroi de liaison (221, 222) forme une extrémité biseautée.

5. Rotor (1) selon la revendication précédente, comprenant en outre deux évidements (241, 242) s'étendant de part et d'autre de la partie centrale (10) au niveau de chacune des jonctions avec les parois de liaison (221, 222).

6. Rotor (1) selon l'une des revendications précédentes, dans lequel dans le plan normal (P), une distance entre tout point de la partie centrale (10) et le deuxième axe (X2) est inférieure à une distance entre chaque intersection entre la surface externe (21) et les parois de liaison (221, 222) et le deuxième axe (X2).

7. Rotor (1) selon l'une des revendications précédentes, dans lequel un passage traversant (11) est formé dans la partie centrale (10) et débouche dans chaque face de ladite partie centrale (10).

8. Rotor (1) selon la revendication 7, dans lequel le passage traversant (11) est centré sur le premier axe (X1) et présente une section cylindrique de révolution tronquée comportant deux méplats en regard du deuxième axe (X2).

9. Rotor (1) selon la revendication 7, dans lequel le passage traversant (11) est centré sur le premier axe (X1) et présente une section cylindrique de révolution.

10. Capteur inductif de déplacement angulaire, le capteur comprenant un rotor (1) selon l'une des revendications précédentes et un stator (3), le stator (3) comprenant une face interne (33) en regard de laquelle le rotor (1) est configuré pour être placé.

## Patentansprüche

1. Ungewickelter Rotor (1) für einen induktiven Winkelverschiebungssensor, wobei der Rotor (1) um eine erste Achse (X1) drehbeweglich und bezüglich dieser ersten Achse (X1) symmetrisch ist, wobei der Rotor (1) aufweist:
- einen zentralen Teil (10),
- zwei aktive Teile (20) auf beiden Seiten des zentralen Teils (10) in Bezug auf die erste Achse (X1), wobei jeder aktive Teil (20) umfasst:
- eine Außenfläche (21), die so gestaltet ist, dass sie einer Innenfläche (33) eines Stators (3) des induktiven Winkelverschiebungssensors gegenüberliegt,
- zwei Verbindungswände (221, 222), die die Außenfläche (21) mit dem Mittelteil (10) verbinden,
wobei der Rotor (1) außerdem eine axiale Symmetrie bezüglich einer zweiten Achse (X2) aufweist, die in einer Normalebene (P) zur ersten Achse (X1) liegt und durch die beiden aktiven Teile (20) verläuft, wobei der Rotor (1) **dadurch gekennzeichnet ist, dass** in der Normalebene (P) jede Verbindungswand (221, 222) einen Winkel (α) von mehr als 45° mit der zweiten Achse (X2) bildet.

2. Rotor (1) nach Anspruch 1, wobei jede Verbindungswand (221, 222) einen Winkel (α) zwischen 45° und 120° mit der zweiten Achse (X2) bildet.

3. Rotor (1) nach einem der Ansprüche 1 oder 2, wobei die Außenfläche (21) jedes aktiven Teils (20) ein Ringsektor ist und sich über einen Winkelsektor (S) von 90° erstreckt.

4. Rotor (1) nach einem der vorhergehenden Ansprüche, wobei die Verbindung zwischen der Außenfläche (21) und jeder Verbindungswand (221, 222) ein abgeschrägtes Ende bildet.

5. Rotor (1) nach dem vorhergehenden Anspruch, der außerdem zwei Ausnehmungen (241, 242) umfasst, die sich auf beiden Seiten des Mittelteils (10) an jeder der Verbindungen mit den Verbindungswänden (221, 222) erstrecken.

6. Rotor (1) nach einem der vorhergehenden Ansprüche, wobei in der Normalebene (P) ein Abstand zwischen jedem Punkt des Mittelteils (10) und der zweiten Achse (X2) kleiner ist als ein Abstand zwischen jedem Schnittpunkt zwischen der Außenfläche (21) und den Verbindungswänden (221, 222) und der zweiten Achse (X2).

7. Rotor (1) nach einem der vorhergehenden Ansprüche, wobei in dem Mittelteil (10) ein Durchgang (11) ausgebildet ist, der in jede Seite des Mittelteils (10) mündet.

8. Rotor (1) nach Anspruch 7, wobei der durchgehende Durchgang (11) auf der ersten Achse (X1) zentriert ist und einen abgestumpften Rotationszylinderquerschnitt mit zwei Abflachungen gegenüber der zweiten Achse (X2) aufweist.

9. Rotor (1) nach Anspruch 7, wobei der Durchgang (11) auf der ersten Achse (X1) zentriert ist und einen rotationszylindrischen Querschnitt aufweist.

10. Induktiver Winkelverschiebungssensor, wobei der Sensor einen Rotor (1) nach einem der vorhergehenden Ansprüche und einen Stator (3) aufweist, wobei der Stator (3) eine Innenfläche (33) aufweist, der gegenüberliegend der Rotor (1) zur Anordnung ausgebildet ist.

## Claims

1. An unwound rotor (1) for an inductive angular displacement sensor, the rotor (1) being movable in rotation around a first axis (X1) and symmetrical with respect to this first axis (X1), the rotor (1) having :
- a central portion (10),
- two active portions (20) on either side of the central portion (10) with respect to the first axis (X1), each active portion (20) comprising:
- an outer surface (21) configured to face an inner face (33) of a stator (3) of the inductive angular displacement sensor,
- two connecting walls (221, 222) connecting the outer surface (21) to the central portion (10),
the rotor (1) also having axial symmetry with respect to a second axis (X2) comprised in a plane (P) normal to the first axis (X1) and passing through the two active portions (20), the rotor (1) being **characterized in that** in the normal plane (P), each connecting wall (221, 222) forms an angle (α) greater than 45° with the second axis (X2).

2. The rotor (1) according to claim 1, wherein each connecting wall (221, 222) forms an angle (α) comprised between 45° and 120° with the second axis (X2).

3. The rotor (1) according to one of claims 1 or 2, wherein the outer surface (21) of each active portion (20) is a ring sector and extends over an angular sector (S) of 90°.

4. The rotor (1) according to one of the preceding claims, wherein the junction between the outer surface (21) and each connecting wall (221, 222) forms a beveled end.

5. The rotor (1) according to the preceding claim, also comprising two recesses (241, 242) extending on either side of the central portion (10) at each of the junctions with the connecting walls (221, 222).

6. The rotor (1) according to one of the preceding claims, wherein in the normal plane (P), a distance between any point in the central portion (10) and the second axis (X2) is less than a distance between each intersection between the outer surface (21) and the connecting walls (221, 222) and the second axis (X2).

7. The rotor (1) according to one of the preceding claims, wherein a through passage (11) is formed in the central portion (10) and leads into each face of said central portion (10).

8. The rotor (1) according to claim 7, wherein the through passage (11) is centered on the first axis (X1) and has a truncated cylinder-of-revolution cross-section including two flats facing the second axis (X2).

9. The rotor (1) according to claim 7, wherein the through passage (11) is centered on the first axis (X1) and has a cylinder-of-revolution cross section.

10. An inductive angular displacement sensor, the sensor comprising a rotor (1) according to one of the preceding claims and a stator (3), the stator (3) comprising an inner face (33), the rotor (1) being configured to be placed facing the inner face (33).
